# EUROPEAN PATENT APPLICATION

(11) **EP 2 302 348 A1**
(43) Date of publication of application: **30.03.2011**
(21) Application number: 10181642.9
(22) Date of filing: 29.09.2010
(51) Int. Cl.: G01M 17/007

(54) **Modular dynamic roller test bench for simulation of road tests of vehicles, particularly road vehicles.**

(30) Priority: 29.09.2009 IT MI20091673
(71) Applicant: Mariani, Giovanni, 20144 Milano (IT)
(72) Inventor: Mariani, Giovanni, 20144 Milano (IT)
(74) Representative: Fisauli, Beatrice A. M.

(57) **Abstract**

The present invention concerns a modular dynamic roller test bench for simulating vehicle road tests. The test bench is used for measuring the torque and rotation speed of the engine, for recording the performance and simulating the dynamics of motion on the road (inertia, aerodynamic friction and rolling resistance) by the application of suitable motor and braking torques to the drive wheels of the vehicle being tested.

Said dynamic test bench comprises one or more rollers revolving with respect to a supporting structure and connected to one or more electric machines, as motor and braking torque generators, said motor and braking torques being applied to the drive wheels of the vehicle being tested by means of said rollers and is characterised in that each of said rollers (5, 24, 25) is coupled with an electric machine (6, 20) positioned inside it.

## Description

The present invention concerns a modular dynamic roller test bench for the simulation of vehicle road tests. The test bench is used for measuring the torque and rotation speed of the engine, for recording the performance and simulating the dynamics of motion on the road (inertia, aerodynamic friction and rolling resistance) by the application of suitable motor and braking torques to the drive wheels of the vehicle being tested.

Dynamic roller test benches are normally used in test rooms for recording performance and measuring polluting emissions, and in research into and development of internal combustion engines and propulsion systems with alternative fuels.

A roller test bench is a piece of equipment able to absorb the mechanical energy produced by the engine of the vehicle being tested, said absorption occurring according to procedures which must simulate as far as possible the various situations of use of the vehicle.

Vehicle test benches are continuously evolving, both because the performance of the engines to be tested has significantly improved and because the tests to be performed are increasingly complex. For example, the laws on emissions, on consumption and on noise require increasingly efficient instruments, at both the design and testing stages.

The introduction of dynamic test benches, due to their ability to simulate the dynamics of motion of the vehicle on the road, has allowed transfer to the test room of a large number of tests and trials which until a short time ago were possible only on the road, with considerable advantages in terms of both measurement accuracy and reduction in times and costs. Obviously, therefore, evolution of the test benches increasingly consolidates this trend.

In the dynamic test bench, the characteristics of the vehicle are simulated by the connection of rollers, rotated by the drive wheels of the vehicle being tested, with a system able to brake and/or drive the engine, simulating as faithfully as possible the real operating conditions.

In practice the effects of friction, inertia, vehicle mass and air resistance are simulated by subjecting the engine, via the wheels, to a torque which brakes or accelerates the engine, as required. Obviously very rapid response times allow more correct simulation of the real operating conditions.

The most advanced test benches are therefore defined "dynamic" due to their ability to apply to the engine both braking and accelerating torques in order to simulate particular effects due to the mass of the vehicle in movement, for example the braking effect of the engine when the accelerator is released, especially if a lower gear is simultaneously engaged.

A fundamental characteristic of dynamic test benches is their prompt response which allows the simulation of very rapid transient phenomena such as those that occur in engagement and disengagement of the clutch during gear changes, in particular for the simulation of drive patterns. This characteristic is particularly interesting in the case of racing simulation.

The brake used in a dynamic test bench is normally an alternating current electric machine used, according to requirements, as a motor or generator. The mechanical energy of the engine being tested is transformed into electrical energy which is returned to the grid by means of an appropriate converter.

The main characteristics of a dynamic test bench are high rapidity of response, low inertia and the possibility of operating at high rotation speeds. The aspects concerning connection to the grid are also important; a high power factor and low harmonic distortion are required.

The electric machine that acts as a brake and motor is normally an asynchronous air-cooled machine. This solution provides a low moment of inertia of the rotor, reduced overall dimensions and low noise level. Embodiments are known which make use of synchronous machines, since they offer advantages in terms of reduction of the response times and reduction of overall dimensions.

The rollers and the electric machine (asynchronous or synchronous) are normally positioned on the same axis.

In the case of test benches for motor vehicles, the electric machine is positioned between the two rollers and is provided with a shaft on which the rollers are keyed. Said electric machine is fitted in a pivoting position to permit measurement of the torque by means of a suitable transducer.

In the case of test benches for motorcycle vehicles, there is one single roller and the electric machine protrudes laterally to the roller. The connection between the axle of the roller and the shaft of the electric machine is made by means of a flexible coupling or a pair of universal joints.

These solutions have various drawbacks.

As regards the test benches for motor vehicles, the particular assembly obliges both rollers to rotate at the same speed and therefore prevents simulation of behaviour of the motor vehicle on a bend.

A first drawback of the test benches for motorcycle vehicles consists in the fact that torsional vibrations occur due to the elasticity of the coupling. Variations in amplitude and/or resonance are created which require very accurate study of the coupling in order not to introduce excessive insertion errors, not acceptable with the precisions required by the latest generation engines. Special algorithms are used to correct the measurement errors which, with the engine-generator systems, can be compensated for within the single revolution. Nevertheless, in particular at the lowest rotation speeds, it is practically impossible to eliminate the resonance, which can lead to breakage of the connection elements.

A second drawback of the test benches for motorcycle vehicles consists in the fact that the electric machine is positioned laterally to the roller and, therefore, occupies considerable space at the side of the roller.

Embodiments are also known which use two or four rollers, depending on whether cars with two or four drive wheels are being tested, each of said rollers being connected to an electric machine protruding laterally, as occurs in the case of test benches for motorcycle vehicles.

In this way it is possible to simulate the behaviour of the vehicle in any situation, but the problems connected with the elasticity of the couplings connecting the rollers to the respective electric machine remain. Furthermore, considerable space is occupied by the electric machines protruding laterally to the rollers. Lastly, a roller test bench is an independent piece of equipment, i.e. assembled for a particular type of vehicle. If it is for motorcycle vehicles, it has one or two rollers, whereas if it is for motor vehicles it has two or four rollers. For complete simulation, i.e. for each wheel, of the road path of a three-wheeler vehicle, a bench with four rollers for motor vehicles would be unsuitable, due to the arrangement of the rollers. For simulation of the behaviour of vehicles with three or more axles, specific test benches would have to be assembled.

Said benches would obviously have a very high cost and would occupy considerable space, and are very rigid in terms of use. In fact a bench for a vehicle with six axles cannot be used simultaneously for testing a vehicle with two and a vehicle with four axles, just as a bench for a vehicle with four axles cannot be used simultaneously for two vehicles with two axles. This is obviously due to the fact that the arrangement of the axles in a vehicle, for example with four axles, is not compatible with the arrangement of the axles of two vehicles with two axles, also in view of the overall dimensions of the bodywork. Synchronous machines also have problems since the permanent magnets, which are on the rotor, limit the rotation speed due to their mass. Said magnets, which are very heavy, tend to come out of their seat due to the particularly intense centrifugal force.

The present invention solves the problems described via the use of a device according to claim 1. The invention consists in a dynamic test bench with one or more rollers, for the simulation of vehicle road tests, of the type providing for the use of one or more electric machines as motor and braking torque generators for application to the vehicle to be tested, characterised in that each of said electric machines is positioned inside each roller, the rotor of said electric machines being preferably integral and coaxial with said rollers and the stator of said electric machine being integral with said structure.

According to a preferred embodiment, each roller, with relative electric machine, is mounted on a dedicated structure, so as to constitute a module. The assembly of two or more modules allows test benches to be obtained for specific requirements.

A test bench for motorcycle vehicles comprises one or two modules, while a test bench for motor vehicles comprises two or four modules, depending on whether the simulation involves only the drive wheels or all the wheels of the vehicle. Analogously, by appropriately assembling three modules, a test bench for tricycles can be composed, while with six or more modules test benches for vehicles with more than two axles can be obtained.

According to another preferred embodiment, the rotor of the electric machines is positioned outside the stator. In this way the rotor can easily be made integral with a roller, while the stator is made integral with the supporting structure of the equipment. In particular the stator shaft acts as a support for the bearings on which the roller and, with it, the rotor rotate.

According to a further preferred embodiment of the invention, the electric machine is a synchronous machine. The particular configuration with external rotor is particularly suitable for annulling the effect of the centrifugal force, as regards the effects on the permanent magnets. In fact the rotor can assume the form of a robust ring, or drum, inside which the permanent magnets are housed. In this configuration the centrifugal force tends to push the magnets against the supporting structure instead of separating them from it.

The use of a device according to the invention therefore overcomes the drawbacks of the prior art. Positioning of the electric machines inside the respective rollers allows substantial reduction in the overall dimensions of the equipment. The particular configuration also allows rigid connection of each rotor to the respective roller and, therefore, elimination of the flexible couplings, thus eliminating at the root all the drawbacks connected with the elasticity of the couplings. According to a preferred embodiment, the roller coincides with the rotor.

The particular arrangement of the electric machines inside the respective rollers allows very compact modules to be obtained which can be easily positioned side by side to coincide with the wheels of any type of vehicle. It will therefore be sufficient to prepare a structure of appropriate dimensions, provided with fastening means for said modules, to assemble test benches for any type of vehicle. This results in a test bench suitable for performing tests also on several vehicles simultaneously, by simply positioning the various modules in an appropriate manner.

Overcoming of the drawbacks due to the limited rotation speed also allows the advantages of use of the synchronous machine to be extended to all the rotation speeds of practical interest.

The use of a device according to the invention therefore allows a system to be obtained with very limited dimensions and, due to the use of a synchronous machine as braking and accelerating torque generator, it provides better simulation of the test due to the reduced response times.

A module comprising a roller, the relative electric machine and the supporting structure will now be described, for illustrative non-limiting purposes. A person skilled in the art will have no difficulty in producing a test bench for vehicles of any type, by simply assembling the necessary number of modules.

The invention will now be described according to a preferred embodiment and with reference to the accompanying figures in which:
- figure 1 shows a module, equipped with a synchronous electric machine, constituting a dynamic test bench according to the invention;
- figure 2 is the enlargement of a part of figure 1;
- figure 3 shows a first variation of the module according to the invention, equipped with a synchronous electric machine;
- figure 4 shows a second variation of the module according to the invention, equipped with a synchronous electric machine;
- figures 5 (a, b, c, d, e) show some possible assemblies of the module according to the invention for tests on vehicles of different configuration.

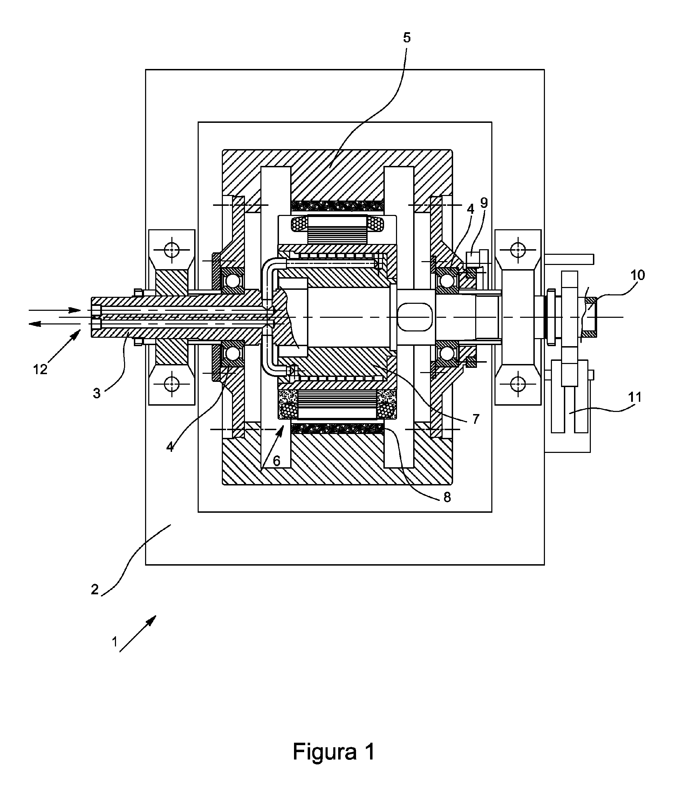

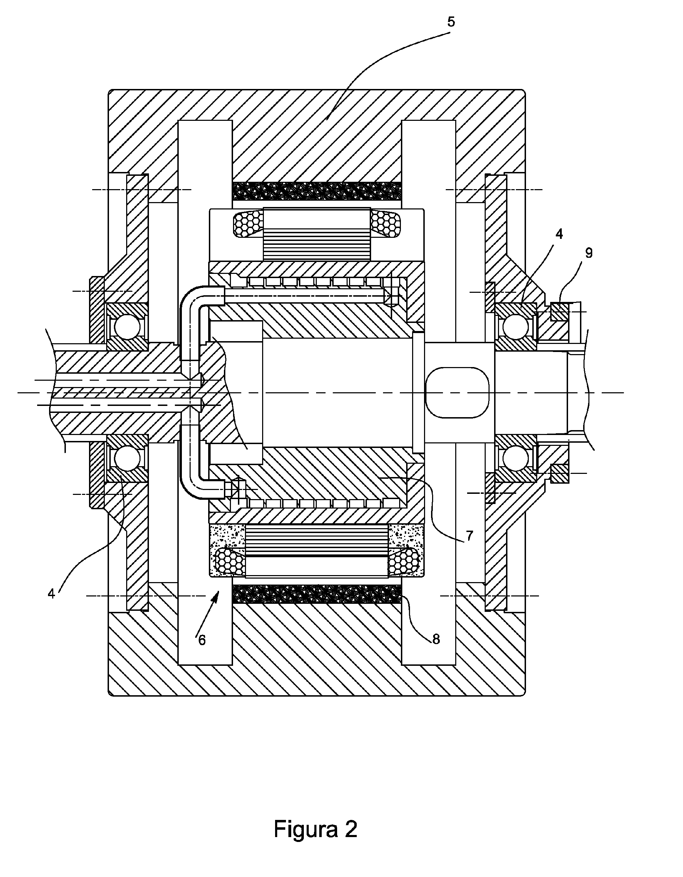

With reference to fig. 1 and 2, (1) indicates a module constituting a dynamic test bench according to the invention. Said module (1) comprises a structure (2) which acts as a support for a shaft (3) which, in turn, supports a pair of bearings (4) on which a roller (5) rotates; the drive wheel (not shown) of the vehicle being tested acts on said roller.

The shaft (3) is free to rotate inside its supports to allow measurement of the torque developed by the drive wheel of the vehicle being tested. The function of said rotation in relation to the measurement instrument adopted will be described in greater detail below.

A synchronous electric machine (6) is housed inside the roller (5). According to a preferred embodiment, the rotor of said synchronous machine (6) coincides with said roller (5), while the stator (7) of said synchronous machine (6) is rigidly connected to said shaft (3). The rotor (5) has the form of a ring, or drum, inside which permanent magnets (8) are housed.

The test equipment is completed by a high resolution encoder (9), an electric power outlet (10) and a torque transducer (11). There is also a liquid cooling system (12) to remove the heat generated during operation.

The torque transducer (11) is mounted between the shaft (3) and the structure (2), effectively blocking the reciprocal rotation, barring a very small quantity which corresponds to the deformation of the loading cell of said torque transducer (11).

In the test equipment the roller (5), which constitutes the rotor, complete with the permanent magnets (8), shall have a mass and moments of inertia, which can be calculated using algorithms of known type, such as to best simulate the real operating conditions of the vehicle being tested.

The test equipment is operated by connecting the encoder (9) and the torque transducer (11) to an instrument of known type (not shown) using known techniques.

An alternative to the operation described consists in connecting the encoder (9) and the electric power outlet (10) to an instrument of known type (not shown) using known techniques. In this case there is no need for the torque transducer (11) and, therefore, the shaft (3) can be rigidly connected to the supporting structure (2).

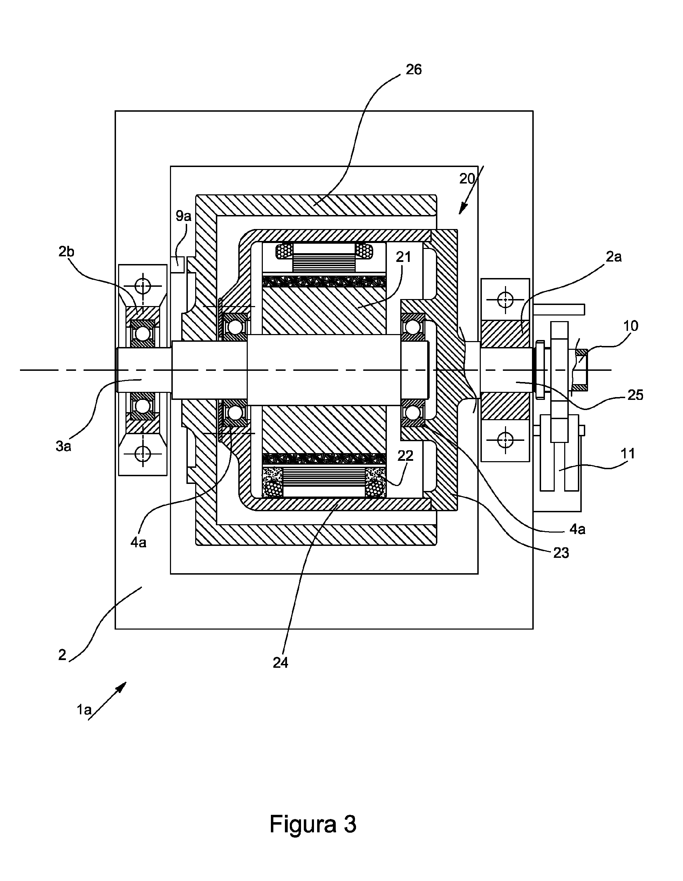

Fig. 3 shows a variation (1 a) of the module according to the invention, equipped with a synchronous electric machine (20).

As appears clear from the figure, the synchronous machine (20) is obtained according to the normal configuration in which the rotor (21) is positioned inside the stator (22).

According to said variation (1a) illustrated in fig. 3, the synchronous electric machine (20) comprises a flange (23), which is rigidly linked to the case (24) of said synchronous machine (20). Said flange (23) is integral with a cylindrical part (25) which is secured, free to rotate around its own axis, by a first support (2a) of said structure (2), said rotation being effectively prevented by the presence of the torque transducer (11). The shaft (3a) of the electric machine (20) rotates on the bearings (4a) supported by the case (24) and the flange (23). A roller (26) is keyed on the shaft (3a); the wheel (not shown) of the vehicle being tested acts on said roller.

In order to reduce the loads on the support (2a), the shaft (3a) is preferably supported at the end by a second support (2b) of said structure (2), with the interposition of a roller bearing, since the shaft (3a) has a high rotation speed. The equipment is completed by a high definition encoder (9a) and an electric power outlet (10).

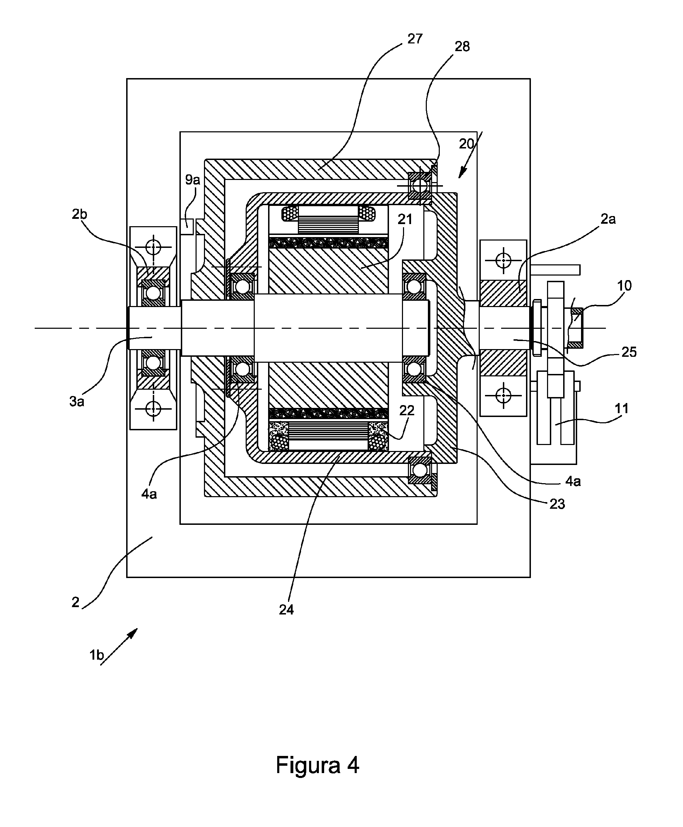

Fig. 4 shows another variation (1b) of the module according to the invention, equipped with a synchronous electric machine (20).

Also in this case the synchronous machine (20) is obtained according to the normal configuration in which the rotor (21) is positioned inside the stator (22).

In the variation (1 b) illustrated in fig. 4, the synchronous electric machine (20) is mounted on the supporting structure (2) as in the variation illustrated in fig. 3. The roller (25), on the other hand, is mounted on the shaft (3a) of the electric machine (20), but is also supported on the opposite side by a bearing (28), supported in turn by the structure (24) of the electric machine (20).

In the preceding description, reference has always been made to a synchronous machine, as it provides optimal performance. However, it is always possible to use an asynchronous machine, which provides the same advantages as a synchronous machine in terms of compactness of the equipment. The performance is obviously inferior, but the cost is lower.

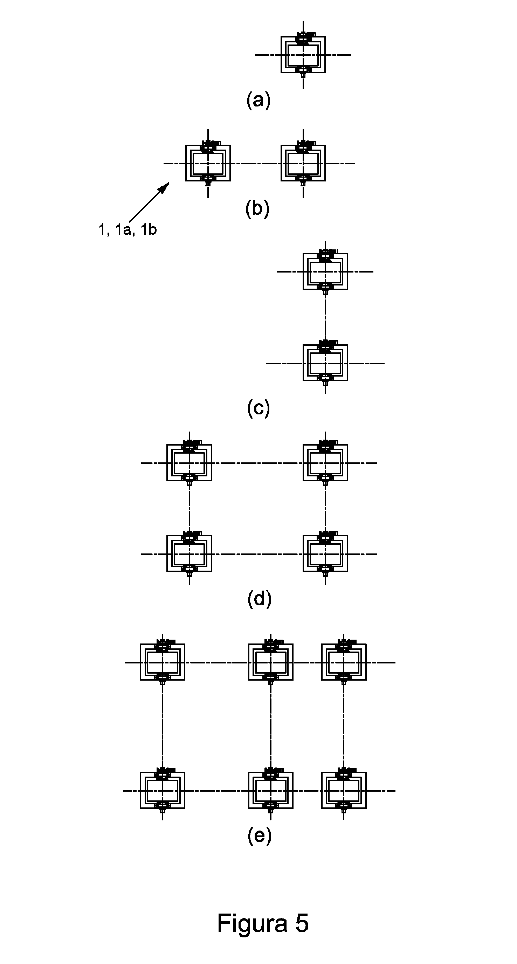

Fig. 5 (a, b, c, d, e) show some possible assemblies of the module (1, 1 a, 1 b) according to the invention, for tests on vehicles of different configuration. In particular:
- fig. 5a shows a configuration with one single module (1, 1 a, 1 b), suitable for tests on motorcycle vehicles, if the simulation involves only the drive wheel;
- fig. 5b shows a configuration with two modules (1, 1 a, 1 b), suitable for tests on motorcycle vehicles, if the simulation involves both the wheels;
- fig. 5c shows a configuration with two modules (1, 1a, 1b), suitable for tests on motor vehicles with two drive wheels, if the simulation involves only the drive wheels;
- fig. 5d shows a configuration with four modules (1, 1a, 1b), suitable for tests on motor vehicles with four drive wheels, and on motor vehicles with two drive wheels, if the simulation also involves the non-drive wheels;
- fig. 5e shows a configuration with six modules (1, 1a, 1b), suitable for tests on vehicles with three axles.

Other configurations of said assemblies are obviously possible, depending on the number and arrangement of the wheels of the vehicles to be tested.

The modules can be fixed directly on the floor of the laboratory, providing appropriate fastening means. Alternatively a metal structure can be provided, in turn fixed to the floor, equipped with appropriate fastening means.

As appears clear from the preceding description, the dynamic roller test bench according to the invention provides considerable advantages, both in terms of reduction of overall dimensions and in terms of the elimination of couplings between each roller and the relative electric machine which acts as a brake and as a motor, eliminating at the root all the problems connected with the elasticity of the couplings. It also makes it possible to produce test benches for vehicles of any configuration, by simply assembling the modules (1, 1a, 1b) in the required number and position.

The invention has been described according to two preferred embodiments. A person skilled in the art may find numerous other embodiments, all falling within the protective scope of the following claims.

## Claims

1. Dynamic test bench, with one or more than one roller, to simulate vehicle road tests, said rollers being rotating with respect to a support structure and linked to one or more than one electric machine, as motor or braking torque generator, said motor and braking torque being applied to the drive wheels of the tested vehicle through said rollers, **characterized in that** each of said rollers (5, 24, 25) is joined to an electric machine (6, 20) positioned in the inner part of said rollers.

2. Dynamic test bench, according to claim 1, **characterized in that** the rotor of said electric machines (6, 20) is integral and coaxial to said rollers (5, 26, 27).

3. Dynamic test bench, according to claims 1 and 2, **characterized in that** the rotor (5) of said electric machine (6) is external to the stator (7) of said electric machine (6).

4. Dynamic test bench, according to claim 3, **characterized in that** said rotor (5) of said electric machines (6) coincides with said roller (5).

5. Dynamic test bench, according to claim 3, **characterized in that** the shaft (3) of said electric machine (6) is assembled on said support structure (2) free to rotate around its axis, so as to permit the insertion of means (11) to measure the torque developed by the tested vehicle.

6. Dynamic test bench, according to claims 1 and 2, **characterized in that** the rotor (21) of said electric machine (20) is internal to the stator (22) of said electric machine (20).

7. Dynamic test bench, according to claim 6, **characterized in that** said electric machine (20) is assembled on said support structure (2) by means of a flange (23) integral to the case (24) of said electric machine (20).

8. Dynamic test bench, according to claim 7, **characterized in that** said roller (26) is cantilevered on the shaft (3a) of said electric machine (20).

9. Dynamic test bench, according to claim 7, **characterized in that** said roller (27) is assembled on the shaft (3a) of said electric machine (20) and supported at the opposite side by a bearing (28), which is supported by the case (24) of said electric machine (20).

10. Dynamic test bench, according to any of the claims 1 to 9, **characterized in that** each roller (5, 26, 27) and the related electric machine (6, 20) are supported by a structure (2), said structure (2), said roller (5, 26, 27) and said electric machine (6, 20) constituting a module (1, 1 a, 1 b).

11. Dynamic test bench, according to claim 10, **characterized in that** it provides for the assembling of a plurality of modules (1, 1 a, 1 b) to compose a specific roller test bench for each possible configuration of the wheels of the vehicle to be tested.

12. Dynamic test bench, according to claim 11, **characterized in that** said modules (1, 1a, 1b) are assembled on a structure provided with fixing means.

13. Dynamic test bench, according to claim 12, **characterized in that** said structure provided with fixing means is the floor of the laboratory in which said modules (1, 1a, 1b) are installed.

14. Dynamic test bench, according to one or more of the claims 1 to 13, **characterized in that** said electric machine (6, 20) is synchronous.

15. Dynamic test bench, according to claim 13, **characterized in that** said rotor (5) of said synchronous electric machine (6) has the shape of a ring, or drum, in the inner part of which some permanent magnets (8) are assembled.

16. Dynamic test bench, according to one or more of the claims 1 to 13, **characterized in that** said electric machine (6, 20) is asynchronous.
